# FASCICULE DE BREVET EUROPEEN

(11) **EP 1 648 737 B1**
(45) Date de publication et mention de la délivrance du brevet: **15.11.2006**
(21) Numéro de dépôt: 04763493.6
(22) Date de dépôt: 26.07.2004
(51) Int. Cl.: B60R 1/00, H04N 7/18, B60R 11/04

(54) **DISPOSITIF DE VISION ARRIERE POUR VEHICULE AUTOMOBILE**
RÜCKBLICKVORRICHTUNG FÜR EIN KRAFTFAHRZEUG
REAR VIEWING DEVICE FOR AN AUTOMOBILE

(30) Priorité: 29.07.2003 FR 0309363
(43) Date de publication de la demande: 26.04.2006
(73) Titulaire: VALEO SYSTEMES D'ESSUYAGE, 78321 La Verrière (FR)
(72) Inventeur: IZABEL, Vincent, F-91800 Brunoy (FR); SIMON, Laurent, F-78550 Richebourg (FR)
(86) Numéro de dépôt international: PCT/EP2004/008338
(87) Numéro de publication internationale: WO 2005/021329

(56) Documents cités:
- EP-A- 1 332 923
- DE-A- 19 961 389
- DE-U- 20 219 004
- US-A- 5 619 036
- US-A1- 2004 130 622

## Description

La présente invention concerne un dispositif de vision arrière pour véhicule automobile, fonctionnant par l'intermédiaire d'une caméra vidéo intégrée à la partie postérieure dudit véhicule.

L'invention trouve une application particulièrement avantageuse, mais non exclusive, dans le domaine de l'assistance au parking des véhicules automobiles.

Il est connu d'employer une caméra vidéo pour faire de la vision arrière sur un véhicule automobile, c'est-à-dire pour contrôler la partie de la route qui se situe derrière ledit véhicule lorsque celui-ci est en mouvement, et notamment pour surveiller le comportement des autres usagers. L'image produite est projetée sur un écran qui est positionné dans l'habitacle sensiblement dans le champ de vision du conducteur. Mais ce type d'utilisation est aujourd'hui essentiellement réservée aux prototypes de salons, en raison du fait qu'elle constitue avant tout une alternative onéreuse aux rétroviseurs classiques, même si le gain en confort n'est pas négligeable.

A contrario, l'usage d'une caméra vidéo pour faire de l'assistance au parking tend à se développer de plus en plus sur les véhicules automobiles de grandes séries. L'idée consiste à projeter, toujours sur un écran placé sensiblement dans le champ de vision du conducteur, l'image en provenance d'une caméra vidéo braquée sur l'espace directement adjacent à la partie arrière du véhicule automobile. Il ne s'agit pas ici d'une simple alternative, mais véritablement d'une nouvelle fonction permettant d'aider l'automobiliste lors des manoeuvres de parking, et notamment lors des marches arrières.

Quelle que soit la finalité d'un tel dispositif de vision arrière, la caméra vidéo est habituellement et fort logiquement implantée au niveau de la partie postérieure du véhicule. C'est ainsi qu'elle peut être intégrée directement dans la carrosserie ou dans tout élément composant la partie postérieure du véhicule, comme par exemple un pare-choc, un aileron, une barrette de hayon, etc. La caméra vidéo est par ailleurs généralement montée de manière fixe puisque son positionnement, précédemment évoqué, est en parfaite adéquation avec sa fonction. Il est à noter que l'objectif de la caméra vidéo peut être protégé ou non par un écran de protection transparent. Quoi qu'il en soit, l'implantation de la caméra vidéo est communément réalisée de façon à ce que l'extrémité de l'objectif ou l'écran de protection s'étende de manière sensiblement affleurante par rapport à son élément support.

Ce type de montage permet certes d'offrir une simplicité structurelle apte à contenir les coûts. Il présente également l'avantage de minimiser l'encombrement du dispositif, pour une plus grande facilité d'implantation. Mais il n'offre aucune protection vis-à-vis des salissures, et s'avère particulièrement vulnérable aux chocs et autres actes de vandalisme.

Il existe bien quelques dispositifs de vision arrière équipés de volets de protection mobiles, mais ils sont combinés à des caméras escamotables comme le dispositif de vision arrière du document US-A-2004/0130622, ce dispositif comprenant les caractéristiques du préambule de la revendication 1. Quel que soit le mode de réalisation choisi, cela implique la présence d'un mécanisme de déploiement complexe et encombrant car il est nécessaire d'assurer à la fois la mobilité du volet et celle de la caméra vidéo. Cette complexité structurelle présente l'inconvénient d'alourdir considérablement le prix de revient d'un tel dispositif, et de diminuer proportionnellement la fiabilité du système. L'augmentation significative d'encombrement est quant à elle de nature à gêner, voir à interdire, l'implantation d'un tel dispositif sur certaines parties du véhicule automobile. La connectique est en outre compliquée à gérer du fait du mouvement.

Aussi le problème technique à résoudre, par l'objet de la présente invention, est de proposer un dispositif de vision arrière pour véhicule automobile, comportant une caméra vidéo destinée à être intégrée fixement à l'arrière d'un véhicule automobile, dispositif de vision arrière qui permettrait d'éviter les problèmes de l'état de la technique en offrant notamment une véritable protection contre les salissures, tout en garantissant l'intégrité de la caméra notamment en cas de chocs ou d'actes de vandalisme.

La solution au problème technique posé consiste, selon la présente invention, en ce que le dispositif de vision arrière comporte en outre un volet monté mobile en déplacement entre une position de fermeture et une position d'ouverture dans lesquelles ledit volet est disposé respectivement devant et à l'écart de l'objectif de la caméra vidéo, ainsi que des moyens moteurs aptes à entraîner en déplacement le volet entre la position de fermeture et la position d'ouverture.

Un tel dispositif de vision arrière permet de faire indifféremment de l'assistance parking et/ou de la vision arrière.

Le fait que la caméra vidéo soit destinée à être intégrée fixement à l'arrière d'un véhicule automobile signifie qu'elle peut être implantée simplement sur la carrosserie ou sur tout autre élément de la partie postérieure du véhicule, mais également qu'elle peut être intégrée directement dedans, de manière partielle ou totale.

La mobilité du volet peut s'effectuer suivant un mouvement quelconque, du moment que ledit volet soit en mesure d'être déplacé entre la position de fermeture dans laquelle il masque l'objectif de la caméra vidéo, et la position d'ouverture dans laquelle il libère le champ de ladite caméra vidéo. Le volet peut ainsi être monté mobile en translation, en rotation, en basculement, en pivotement, ou en une combinaison quelconque de ces mouvements.

La protection offerte par le volet s'exerce avant tout au niveau de l'objectif de la caméra vidéo, car il s'agit de l'unique élément externe pour lequel un défaut de propreté et/ou d'intégrité serait susceptible de remettre en cause la fonction du dispositif de vision arrière.

L'invention telle qu'ainsi définie permet de combiner les avantages précédemment évoqués d'une camera fixe avec ceux d'un volet de protection mobile. Le volet assure en effet une protection efficace contre les salissures, les chocs et/ou le vandalisme, notamment lorsque le dispositif de vision arrière n'est pas mis en oeuvre.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre en perspective un dispositif de vision arrière selon un premier mode de réalisation de l'invention.
La figure 2 montre en perspective arrière le volet du dispositif de vision arrière de la figure 1.
La figure 3 représente en détail les moyens de rappel élastique du dispositif de vision arrière de la figure 1.
La figure 4 fait apparaître les moyens de butée du dispositif de vision arrière de la figure 1, en position active.
La figure 5 est une vue similaire à la figure 4, mais avec les moyens de butée en position passive.
La figure 6 illustre une première variante de réalisation comportant des moyens de blocage en position passive.
La figure 7 constitue une vue similaire à la figure 6, mais avec les moyens de blocage en position active.
La figure 8 montre une seconde variante de réalisation incorporant des moyens de verrouillage représentés en position active.
La figure 9 est une vue similaire à la figure 8, mais avec les moyens de verrouillage en position passive.
La figure 10 fait apparaître en détail une partie des moyens de verrouillage de la figure 8.
La figure 11 illustre les moyens de nettoyage et les moyens d'étanchéité du dispositif de vision arrière de la figure 1, lorsque le volet est en position d'ouverture.
La figure 12 constitue une vue similaire à la figure 11, mais avec le volet en position de fermeture.
La figure 13 représente une partie des moyens moteurs du dispositif de vision arrière de la figure 1.
La figure 14 montre en détail le support du dispositif de vision arrière de la figure 1.
La figure 15 fait apparaître le dispositif de vision arrière de la figure 1 en cours d'assemblage.
La figure 16 illustre en perspective un dispositif de vision arrière selon un second mode de réalisation de l'invention.
La figure 17 représente en perspective le support du dispositif de vision arrière de la figure 16.
La figure 18 est une vue de dessous du carter de protection du dispositif de vision arrière de la figure 16.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

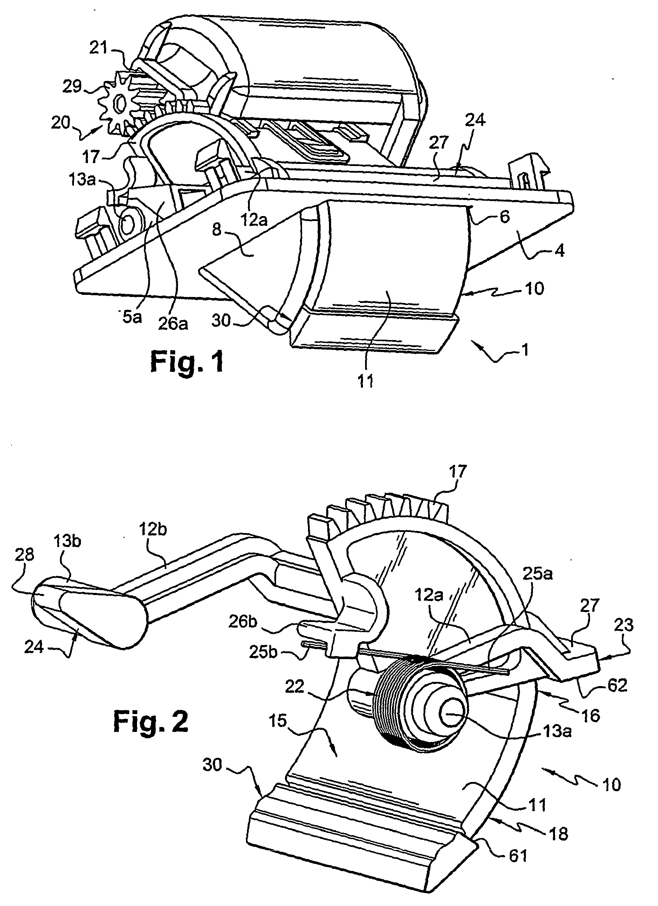

La figure 1 illustre un dispositif de vision arrière 1 qui comporte classiquement une caméra vidéo 2 dont l'objectif est protégé par un écran transparent 3. Dans ce mode particulier de réalisation, choisi uniquement à titre d'exemple, la caméra vidéo 2 et l'écran de protection 3 sont solidaires d'un support 4 qui est destiné à être implanté fixement à l'arrière d'un véhicule automobile.

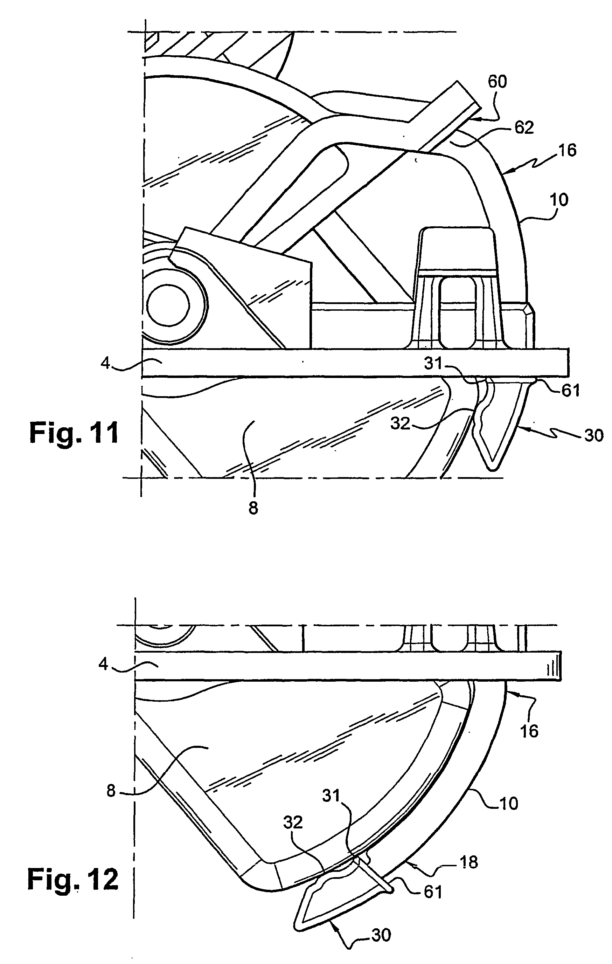

Conformément à l'objet de la présente invention, le dispositif de vision arrière 1 est en outre doté d'un volet 10 qui est monté mobile en pivotement entre une position de fermeture (figure 12) et une position d'ouverture (figure 11) dans lesquelles ledit volet 10 est disposé respectivement devant et à l'écart de l'écran de protection 3. Le dispositif de vision arrière 1 comprend par ailleurs des moyens moteurs 20 qui sont à même d'entraîner en pivotement le volet 10 entre la position de fermeture et la position d'ouverture.

Selon une particularité de l'invention, les moyens moteurs 20, 120 sont en mesure d'immobiliser le volet 10, 110 dans au moins une position intermédiaire située entre la position de fermeture et la position d'ouverture.

Ainsi qu'on peut le voir plus clairement sur la figure 2, le volet 10 comporte une partie courbée 11, en forme de portion tubulaire, ainsi que deux bras d'articulation 12a, 12b portant chacun à leur extrémité libre une partie cylindrique 13a, 13b, formant axe de pivotement. Les deux bras d'articulation 12a, 12b sont respectivement solidaires des deux extrémités du bord supérieur 14 de la partie courbée 11 et s'étendent du côté de la face concave 15 de ladite partie courbée 11. Les parties cylindriques 13a, 13b sont quant à elles coaxiales l'une par rapport à l'autre, mais également par rapport à l'axe correspondant à la courbure de la face concave 15 de la partie courbée 11. L'ensemble est agencé de manière à ce que les parties cylindriques 13a, 13b puissent s'emboîter puis coopérer par rotation avec deux paliers ouverts 5a, 5b solidaires du support 4 ; la partie courbée 11 étant alors à même de se déplacer le long de l'écran de protection 3, entre la position de fermeture et la position d'ouverture.

Dans ce mode de réalisation actuellement préféré de l'invention, les moyens moteurs 20 comprennent tout d'abord un moteur électrique 21 qui est apte à entraîner en pivotement le volet 10 de la position de fermeture à la position d'ouverture. Les moyens moteurs 20 sont par ailleurs dotés de moyens de rappel élastique 22 qui sont à même d'entraîner en pivotement le volet 10 de la position d'ouverture à la position de fermeture. Les moyens moteurs 20 sont en outre pourvus de moyens de butée 23, 24 qui sont en mesure stopper le déplacement du volet 10 en position d'ouverture et en position de fermeture.

Dans cet exemple de réalisation, le moteur électrique 21 est tout à fait classique dans la mesure où son arbre d'entraînement n'est à même de tourner que dans un seul sens, qui correspond ici avantageusement à celui d'ouverture du volet 10. Dans la pratique, lorsque le volet 10 arrive en butée, l'électronique qui pilote le moteur électrique 21 adapte la tension d'alimentation de manière à soulager ledit moteur électrique 21, tout en garantissant le maintien dudit volet 10 en position d'ouverture. Dès que le moteur électrique se coupe, le volet 10 est ramené automatiquement en position de fermeture sous l'effet des moyens de rappel élastique 22.

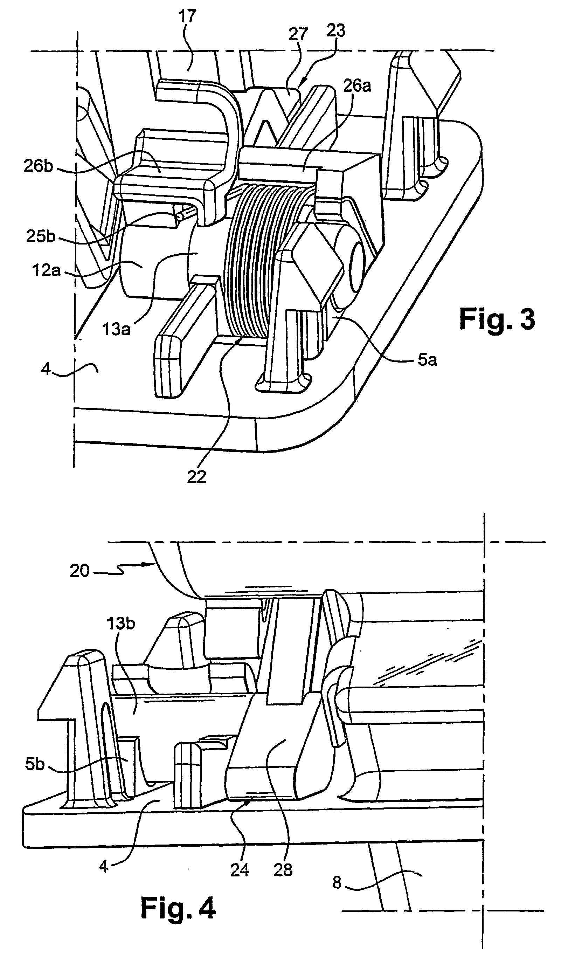

Conformément aux figures 2 et 3, les moyens de rappels élastique 22 se présentent quant à eux sous la forme d'un ressort spiral qui est classiquement mis en tension autour de la partie cylindrique 13a, avec ses extrémités libres 25a, 25b coopérant par contact bloquant avec deux butées 26a, 26b respectivement solidaires du support 4 et du volet 10.

Les moyens de butée 23, 24 sont dans cet exemple de réalisation bien distincts.

Les figures 1 et 2 montrent plus particulièrement les moyens de butée 23 qui permettent de stopper le déplacement du volet 10 en position de fermeture. Ils sont constitués ici par une large barre 27, qui est ménagée tout le long de la partie proximale 16 de la partie courbée 11, et qui est apte à coopérer par contact bloquant avec le support 4 lorsque ladite partie courbée 11 a totalement recouvert l'écran de protection 3.

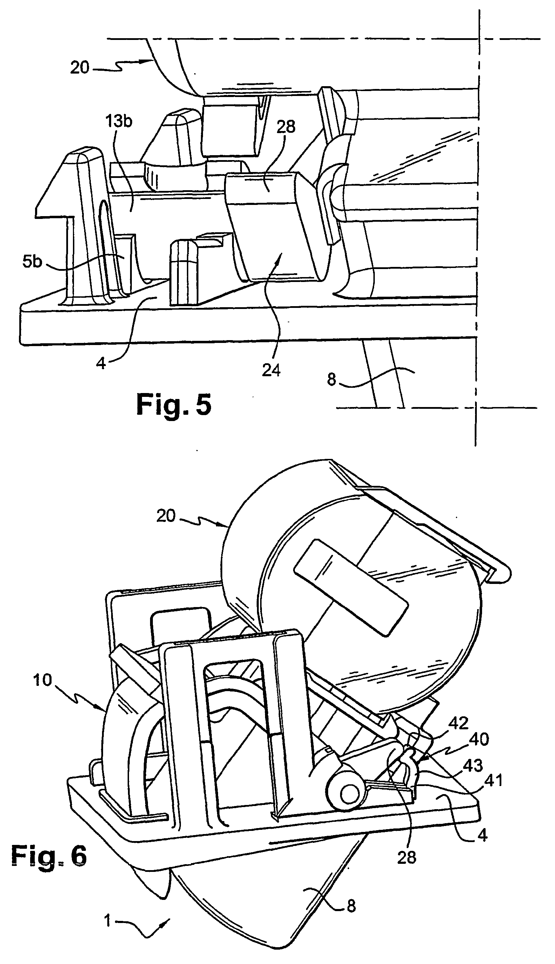

Ainsi qu'on peut le voir notamment sur les figures 2, 4 et 5, les moyens de butée 24 permettant de stopper le déplacement du volet 10 en position de d'ouverture sont constitués ici par un ergot 28 qui est solidaire de la partie cylindrique 13b et qui s'étend en arrière par rapport au reste du volet 10. L'ensemble est agencé de manière à ce que l'ergot 28 ne vienne au contact du support 4 que lorsque le volet 10 est en position d'ouverture (figure 4). Le reste du temps, et notamment lorsque le volet 10 est en position de fermeture (figure 5), l'ergot 28 est positionné à distance du support 4.

Mais selon une variante de réalisation, les moyens moteurs 20 pourraient très bien ne comporter qu'un simple moteur électrique de type pas à pas. Le fait que la rotation de l'arbre d'entraînement d'un tel moteur puisse se faire réversiblement dans un sens ou dans l'autre, permet d'entraîner en pivotement le volet 10 indifféremment de la position de fermeture à la position d'ouverture ou inversement. Le fait que la rotation de l'arbre d'entraînement puisse en outre être contrôlée angulairement, permet également de stopper le déplacement et d'immobiliser le volet 10, soit en position d'ouverture, soit en position de fermeture. Cette configuration permet de se dispenser avantageusement de quelconques moyens de rappel élastique 22 et autres moyens de butées 23, 24.

Quelle que soit la variante retenue, la transmission au volet mobile 10 du mouvement généré par les moyens moteurs 20 peut s'effectuer par tout moyen connu, et notamment par engrenages, par roues de friction, par courroie, etc. Conformément à la figure 1, la transmission du mouvement est réalisée dans cet exemple de réalisation en faisant coopérer par engrènement un pignon 29 solidaire de l'arbre d'entraînement du moteur électrique 21, avec un secteur denté 17 solidaire du volet 10.

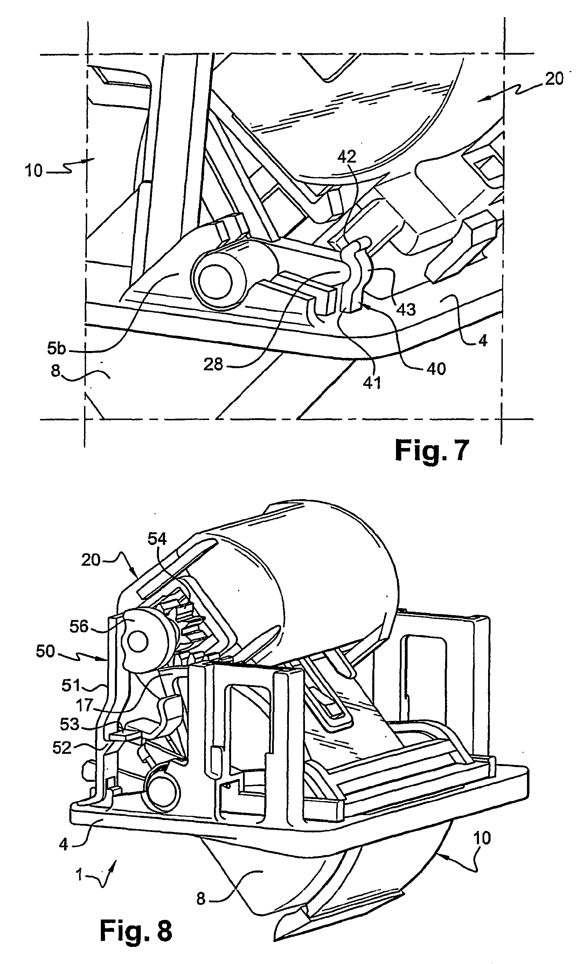

Les figures 6 et 7 représentent une première variante de réalisation dans laquelle le volet 10 est en mesure d'être entraîné manuellement en déplacement entre la position de fermeture et une position de stockage (figure 7) située au-delà de la position d'ouverture (figure 6). Par ailleurs, le dispositif de vision arrière 1 est doté de moyens de blocage 40 qui sont à même d'immobiliser le volet 10 en position de stockage (figure 7). Cette caractéristique permet à l'utilisateur de repousser le volet 10 depuis l'extérieur lorsque les moyens moteurs 20 sont en panne ou que leur fonctionnement est défectueux. La fonction vision arrière peut ainsi avantageusement préservée.

Dans cet exemple de réalisation, les moyens de blocage 40 sont constitués par une languette 41 solidaire du support 4, dont l'extrémité distale 42 est en mesure de constituer les moyens de butées 23 (figure 6), et dont la partie centrale 43 est conformée afin de pouvoir coopérer par emboîtement avec l'extrémité distale de l'ergot 28 (figure 7). Bien évidemment, l'ensemble est agencé de manière à ce que les moyens moteurs 20 ne soient pas en mesure de mettre en oeuvre les moyens de blocage 40, c'est-à-dire d'entraîner le volet 10 de la position d'ouverture à la position de stockage. De la même façon, ni lesdits moyens moteurs 20, ni les éventuels moyens de rappel élastique 22 ne sont calibrés pour permettre une désactivation des moyens de blocage 40. Concrètement, seul l'utilisateur est en mesure de provoquer le l'engagement ou le désengagement de l'extrémité distale de l'ergot 28, de la partie centrale 43 de forme sensiblement complémentaire, par déformation élastique de la languette 41.

Les figures 8 à 10 font apparaître une seconde variante de réalisation qui est totalement incompatible avec la caractéristique précédemment évoquée, puisqu'elle concerne l'inviolabilité du dispositif de vision arrière 1. Cette variante se singularise par la présence de moyens de verrouillage 50 qui sont à même de bloquer le volet 10 en position de fermeture, en l'absence de mise en oeuvre des moyens moteurs 20. Cela signifie que seul les moyens moteurs 20 sont en mesure d'activer ou de désactiver les moyens de verrouillage 50, et que par conséquent le déplacement du volet 10 ne peut être opéré manuellement depuis l'extérieur.

Dans l'exemple de réalisation des figures 8 à 10, les moyens de verrouillage 50 comportent tout d'abord une languette 51 qui est montée élastiquement pivotante sur le support 4 et qui est dotée d'une butée 52 apte à coopérer par contact avec une patte 53 solidaire du volet 10. Les moyens de verrouillage 50 comprennent ensuite un pignon spécifique 54 qui se singularise par le fait qu'il comporte un secteur non denté, c'est-à-dire une partie lisse 55. Ce pignon spécifique 54 est par ailleurs solidarisé à l'arbre de transmission du moteur électrique 21 en lieu et place du pignon 29 afin de pouvoir coopérer par engrènement avec le secteur denté 17 solidaire du volet 10. Les moyens de verrouillage 50 comportent enfin une came 56 qui est solidaire de l'arbre de transmission du moteur électrique 21 et qui est à même de coopérer par contact glissant avec l'extrémité distale de la languette 51.

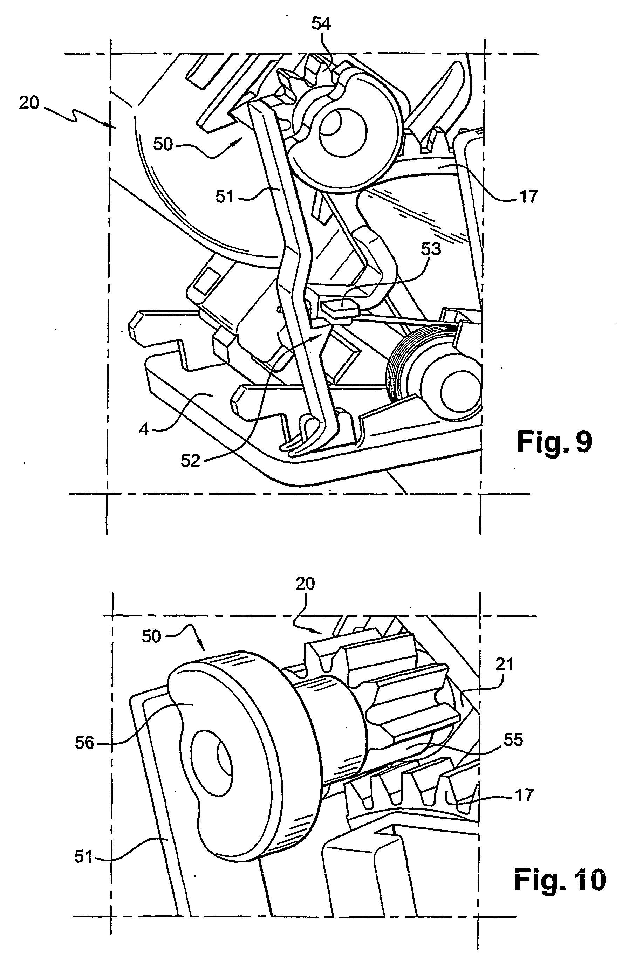

L'ensemble est agencé de manière à ce qu'en position de fermeture (figure 8), la languette 41 soit en contact avec la partie non circulaire de la came 56, la partie lisse 55 du pignon spécifique 54 soit en regard du secteur denté 17 (figure 10), et la patte 53 solidaire du volet 10 soit en appui contre la butée 52 de ladite languette 51. Cette dernière caractéristique interdit toute mobilité au volet 10, et conséquemment assure le verrouillage en position de fermeture.

Dès que les moyens moteurs 20 sont activés, l'arbre de transmission du moteur électrique 21 commence sa rotation, ce qui a pour effet de faire tourner la came 56 et le pignon spécifique 54, mais ce dernier n'est pas encore en mesure d'engrener sur la secteur denté 17. Quoi qu'il en soit, la came 56 repousse progressivement la languette 41 qui se déforme élastiquement. La butée 52 se désengage ainsi tout aussi progressivement de la patte 53 jusqu'à séparation totale, de sorte que le blocage du volet 10 est alors déverrouillé. La portion dentée du pignon spécifique 54 commence alors seulement à engrener progressivement avec le secteur denté 17, entraînant par conséquent le pivotement du volet 10.

Il est à noter que le blocage du volet 10 par les moyens de verrouillage 50 est réalisé simplement grâce à une cinématique inverse de celle précédemment décrite.

Dans ce mode particulier de réalisation, le volet 10 est monté mobile à travers une fente 6 qui est ménagée dans le support 4. Or selon une particularité de l'invention, le dispositif de vision arrière 1 est en outre doté de moyens d'étanchéité 60 qui sont aptes à étancher l'espace entre le volet 10 et le support 4. Le but est de protéger, essentiellement de la poussière et de l'humidité, tout ce qui se trouve derrière le support 4 et notamment la caméra vidéo 2.

Ainsi qu'on peut le voir sur les figures 11 et 12, les moyens d'étanchéité 60 de cet exemple de réalisation sont pourvus tout d'abord d'un premier joint 61 qui est positionné à l'extrémité distale 18 du volet 10 et qui est en mesure d'étancher l'espace entre le volet 10 et le support 4 lorsque ledit volet 10 est en position d'ouverture. Les moyens d'étanchéité 60 comprennent en outre un second joint 62 qui est quant à lui positionné à l'extrémité proximale 16 du volet 10 et qui est à même d'étancher l'espace entre le volet 10 et le support 4 lorsque ledit volet est en position de fermeture.

Conformément à une variante de réalisation ou en complément du mode de réalisation précédemment décrit, les moyens d'étanchéité 60 peuvent comporter un troisième joint, qui est solidaire du support 4, qui est positionné au niveau de la fente 6 et qui est apte à coopérer par contact glissant avec le volet 10.

On a vu précédemment que dans cet exemple de réalisation, le dispositif de vision arrière 1 comportait un écran transparent 3 destiné à protéger l'objectif de la caméra vidéo 2. Aussi, selon une caractéristique avantageuse de l'invention, le dispositif de vision arrière 1 est en outre pourvu de moyens de nettoyage 30 qui sont en mesure d'essuyer l'écran de protection 3 lors du déplacement du volet 10 entre la position de fermeture et la position d'ouverture.

Selon une particularité de l'invention, la surface externe de l'écran de protection 3 est sensiblement parallèle à la trajectoire de déplacement du volet 10, et les moyens de nettoyage 30 comportent un joint racleur 31 qui est solidaire de l'extrémité distale 18 du volet 10 et qui est en mesure de coopérer par contact glissant avec ladite surface externe de l'écran de protection 3. Cette caractéristique permet au joint racleur 31 de rester en permanence au contact de l'écran de protection 3 lors du déplacement du volet 10 entre le position de fermeture et la position d'ouverture. Il est ainsi parfaitement à même d'exercer une fonction d'essuyage dès que le volet 10 est mis en oeuvre.

Selon une autre particularité visible notamment aux figures 11 et 12, la surface externe convexe de l'écran de protection 3 est sensiblement parallèle à la trajectoire courbée du volet 10, et les moyens de nettoyage 30 sont constitués par une partie saillante 32 du joint d'étanchéité distale 61 du volet 10, partie saillante 32 qui est en mesure de coopérer par contact glissant avec ladite surface externe de l'écran de protection 3. Là encore, la partie saillante 32 demeure constamment en contact avec l'écran de protection 3, de sorte qu'elle est elle aussi parfaitement en mesure de réaliser la fonction d'essuyage lorsque le volet 10 est entraîné en pivotement entre le position de fermeture et la position d'ouverture.

Mais à titre de variante, dans le cas où l'objectif de la caméra vidéo 2 serait dépourvu d'écran de protection 3, le dispositif de vision arrière 1 pourrait alors être avantageusement doté de moyens de nettoyage aptes à essuyer la lentille externe de l'objectif de la caméra vidéo 2 lors du déplacement du volet 10 entre la position de fermeture et la position d'ouverture.

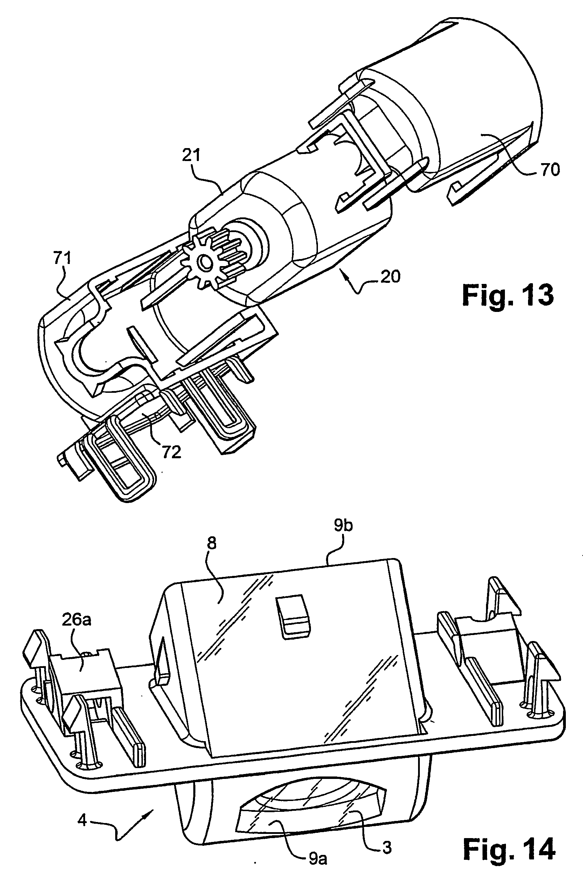

Les figures 13 à 15 illustrent l'agencement des principaux éléments composant le dispositif de vision arrière 1.

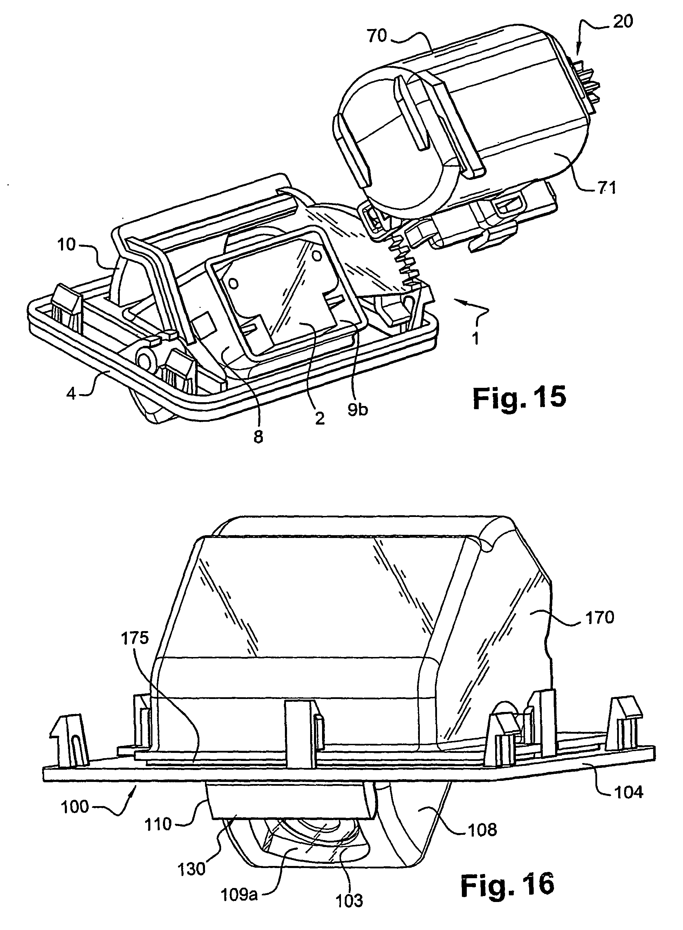

On remarque tout d'abord sur la figure 13 que le moteur électrique 21 est encapsulé dans deux demi carters de protection 70, 71, dont l'un fait partie intégrante du couvercle 72 de boîtier de caméra. Une fois assemblé par emboîtement de pièces de fixation complémentaires, cet ensemble est en mesure d'être monté conformément à la figure 15 sur le support 4 qui est visible en détail sur la figure 14.

Le support 4 constitue une sorte d'interface avec le véhicule automobile, et il confère un caractère modulaire au dispositif de vision arrière 1 selon l'invention. Le support 4 comporte ici avantageusement une partie formant boîtier 8 qui est destinée à recevoir et à protéger la caméra vidéo 2. Cette partie formant boîtier 8 présente par ailleurs une ouverture avant 9a destinée à recevoir l'écran de protection 3 transparent, ainsi qu'une ouverture arrière 9b permettant l'introduction de la caméra vidéo 2.

Ainsi qu'on peut le voir sur la figure 15, le montage final du dispositif de vision arrière 1 consiste à assembler l'ensemble représenté à la figure 13 sur la le boîtier 8 ménagé dans le support 4, en ajustant le couvercle 72 sur l'ouverture arrière 9b. On remarque ici très bien que dans ce premier mode de réalisation de l'invention, le volet 10 est monté mobile en déplacement par rapport au support 4, sur lequel est par ailleurs monté fixement la caméra vidéo 2.

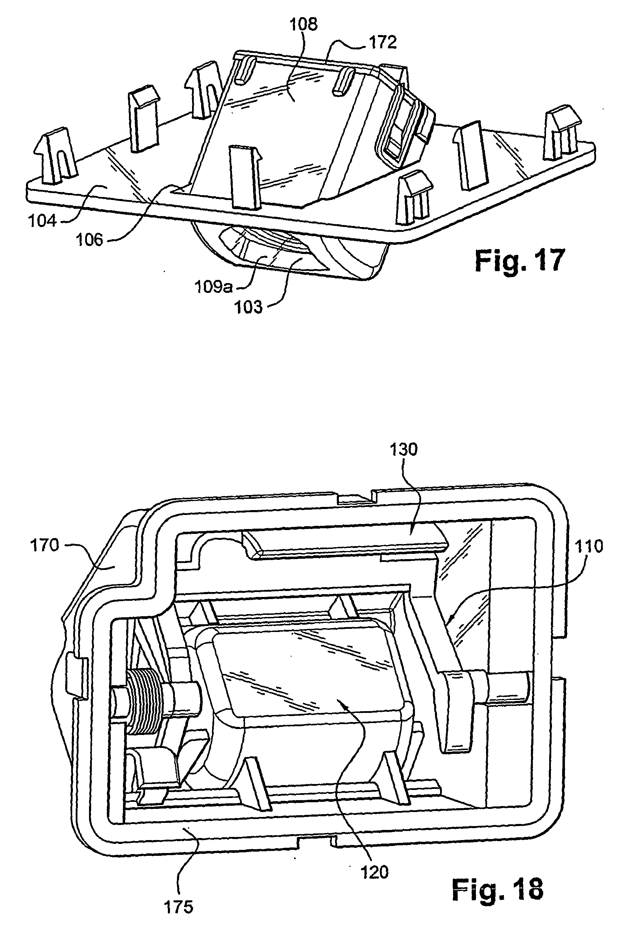

La figure 16 montre un dispositif de vision arrière 100 selon un second mode de réalisation de l'invention.

Ainsi qu'on peut le voir sur la figure 17, la structure du support 104 est ici extrêmement simple dans la mesure où elle n'intègre que le boîtier 108 destiné à recevoir la caméra vidéo 2. On note que l'ouverture avant 109a est également obturée par un écran de protection 103 transparent, tandis que l'ouverture arrière 109b est fermée par un couvercle de boîtier 172 indépendant.

Conformément à la figure 18, ce second mode de réalisation se singularise essentiellement par le fait qu'il comporte un volet 110 qui est monté mobile en déplacement par rapport à un carter de protection 170 des moyens moteurs 120.

La plupart des autres composants du dispositif de vision arrière 100 étant communs au premier mode de réalisation, ils ne seront pas décrits davantage ici. On signalera simplement la présence d'un joint d'étanchéité 175 à la base du carter de protection 170 afin d'étancher la liaison avec le support 104.

Ce second mode de réalisation présente l'avantage par rapport à l'autre de minimiser la chaîne de côtes entre les différents éléments d'engrènement, ce qui permet une plus grande précision d'ajustage et par conséquent de réduire les divers bruits de fonctionnement.

Selon une autre particularité de l'invention, le volet 10, 110 est réalisé en matériau transparent, par exemple en polycarbonate. Cette caractéristique permet de ne pas perdre la fonction de vision arrière en cas de blocage du volet 10, 110 pour quelque raison que ce soit, même si ladite fonction peut être dégradée dans certaines conditions comme par exemple lorsque le blocage est dû au gel.

De manière particulièrement avantageuse, le volet 10, 110 peut comporter des moyens prismatiques aptes à modifier le champ de vision de la caméra vidéo 2 en fonction de la position relative dudit volet 10, 110 par rapport à l'objectif de ladite caméra vidéo 2. A titre d'exemple, la vision pourra s'effectuer vers le bas lorsque le volet 10, 110 sera en position de fermeture, assurant ainsi la fonction d'assistance parking, et au loin lorsque ledit volet 10, 110 sera ouvert ou à demi ouvert, assumant alors la fonction vision arrière.

Bien entendu, l'invention concerne également tout véhicule automobile comportant au moins un dispositif de vision arrière 1, 100 tel que précédemment décrit.

## Revendications

1. Dispositif de vision arrière (1, 100) pour véhicule automobile, comportant
- une caméra vidéo (2) destinée à être intégrée fixement à l'arrière d'un véhicule automobile,
- un volet (10, 110) monté mobile entre une position de fermeture et une position d'ouverture dans lesquelles ledit volet (10, 110) est disposé respectivement devant et à l'écart de l'objectif de la caméra vidéo (2), et
- des moyens moteurs (20, 120) aptes à entraîner en déplacement le volet (10, 110) entre la position de fermeture et la position d'ouverture,
le volet comportant des moyens de pivotement (13a, 13b) définissant un axe de pivotement et permettant le passage d'une position à l'autre,
**caractérisé en ce que** le volet comporte en outre
- une partie courbée (11) ; et
- des bras d'articulation (12a, 12b),
les bras d'articulation étant solidaires de la partie courbée (11) et des moyens de pivotement (13a, 13b).

2. Dispositif de vision arrière (1, 100) selon la revendication 1, **caractérisé en ce que** l'axe de pivotement est coaxial par rapport à l'axe correspondant à la courbure de la face concave (15) de la partie courbée (11).

3. Dispositif de vision arrière (1, 100) selon la revendication 1 ou 2, **caractérisé en ce que** le volet (10, 110) comporte en outre un moyen de transmission (17) d'un mouvement généré par les moyens moteurs (20), le moyen de transmission étant solidaire du volet (10, 110) .

4. Dispositif de vision arrière (1, 100) selon la revendication précédente, **caractérisé en ce que** le moyen de transmission (17) est ménagé sur un des bras d'articulation (12a, 12b).

5. Dispositif de vision arrière (1, 100) selon la revendication 3 ou 4, **caractérisé en ce que** le moyen de transmission (17) est venu de matière avec le volet (10, 100).

6. Dispositif de vision arrière (1, 100) selon l'une quelconque des revendications précédentes, **caractérisé en ce qu'**il comporte des moyens de rappel élastique (22, 25a, 25b) aptes à entraîner en déplacement le volet (10, 110) de la position d'ouverture à la position de fermeture.

7. Dispositif de vision arrière (1, 100) selon la revendication précédente, **caractérisé en ce que** le volet (10, 110) comporte un butée (26b) solidaire du volet 10, coopérant par contact bloquant avec les moyens de rappel élastique (25b).

8. Dispositif de vision arrière (1, 100) selon la revendication précédente, **caractérisé en ce que** le butée (26b) est venu de matière avec le volet (10, 110) .

9. Dispositif de vision arrière (1, 100) selon l'une quelconque des revendications précédentes, **caractérisé en ce que** les moyens moteurs (20, 120) sont aptes à immobiliser le volet (10, 110) dans au moins une position intermédiaire située entre la position de fermeture et la position d'ouverture.

10. Dispositif de vision arrière (1, 100) selon l'une des revendications 1 à 9, **caractérisé en ce que** les moyens moteurs (20, 120) comportent:
- un moteur électrique (21) qui est apte à entraîner en déplacement le volet (10, 110) de la position de fermeture à la position d'ouverture,
- des moyens de rappel élastique (22) aptes à entraîner en déplacement le volet (10, 110) de la position d'ouverture à la position de fermeture,
- et des moyens de butée (23, 24) aptes à stopper le déplacement du volet (10, 110) en position d'ouverture et en position de fermeture.

11. Dispositif de vision arrière (1, 100) selon l'une des revendications 1 à 9, **caractérisé en ce que** les moyens moteurs (20, 120) comportent un moteur électrique de type pas à pas qui est apte, d'une part, à entraîner en déplacement le volet (10, 110) entre la position de fermeture et la position d'ouverture, et d'autre part, à stopper le déplacement dudit volet (10, 110) en position d'ouverture et en position de fermeture.

12. Dispositif de vision arrière (1, 100) selon l'une quelconque des revendications 1 à 10, **caractérisé en ce que** le volet (10, 110) est apte à être entraîné manuellement en déplacement entre la position de fermeture et une position de stockage située au-delà de la position d'ouverture, et **en ce que** ledit dispositif de vision arrière (1, 100) comporte des moyens de blocage (40) aptes à immobiliser le volet (10, 110) en position de stockage.

13. Dispositif de vision arrière (1, 100) selon l'une quelconque des revendications 1 à 11, **caractérisé en ce qu'**il comporte des moyens de verrouillage (50) qui sont aptes à bloquer le volet (10, 110) en position de fermeture en l'absence de mise en oeuvre des moyens moteurs (20, 120).

14. Dispositif de vision arrière (1, 100) selon l'une quelconque des revendications 1 à 13, **caractérisé en ce que** le volet (10, 110) est monté mobile à travers une fente (6, 106) ménagée dans un support (4, 104), et **en ce que** ledit dispositif de vision arrière (1, 100) comporte des moyens d'étanchéité (60) aptes à étancher l'espace entre le volet (10, 110) et le support (4, 104).

15. Dispositif de vision arrière (1, 100) selon la revendication 14, **caractérisé en ce que** les moyens d'étanchéité (60) comportent un premier joint (61) à l'extrémité distale (18) du volet (10, 110) qui est apte à étancher l'espace entre le volet (10, 110) et le support (4, 104) lorsque ledit volet (10, 110) est en position d'ouverture, ainsi qu'un second joint (62) à l'extrémité proximale (16) du volet (10, 110) qui est apte à étancher l'espace entre le volet (10, 110) et le support (4, 104) lorsque ledit volet (10, 110) est en position de fermeture.

16. Dispositif de vision arrière (1, 100) selon l'une des revendications 14 ou 15, **caractérisé en ce que** les moyens d'étanchéité (60) comportent un troisième joint qui est solidaire du support (4, 104), qui est positionné au niveau de la fente (6, 106) et qui est apte à coopérer par contact glissant avec le volet (10, 110) .

17. Dispositif de vision arrière (1, 100) selon l'une quelconque des revendications 1 à 16, **caractérisé en ce qu'**il comporte des moyens de nettoyage (30, 130) aptes à essuyer la lentille externe de l'objectif de la caméra vidéo (2) lors du déplacement du volet (10, 110) entre la position de fermeture et la position d'ouverture.

18. Dispositif de vision arrière (1, 100) selon l'une quelconque des revendications 1 à 16, **caractérisé en ce qu'**il comporte, d'une part, un écran transparent (3, 103) apte à protéger l'objectif de la caméra vidéo (2), et d'autre part, des moyens de nettoyage (30, 130) aptes à essuyer ledit écran de protection (3, 103) lors du déplacement du volet (10, 110) entre la position de fermeture et la position d'ouverture.

19. Dispositif de vision arrière (1, 100) selon la revendication 18, **caractérisé en ce que** la surface externe de l'écran de protection (3, 103) est sensiblement parallèle à la trajectoire de déplacement du volet (10, 110), et **en ce que** les moyens de nettoyage (30, 130) comportent un joint racleur (31) qui est solidaire de l'extrémité distale (18) du volet (10, 110) et qui est apte à coopérer par contact glissant avec ladite surface externe de l'écran de protection (3, 103).

20. Dispositif de vision arrière (1, 100) selon l'une des revendications 18 ou 19, **caractérisé en ce que** la surface externe de l'écran de protection (3, 103) est sensiblement parallèle à la trajectoire de déplacement du volet (10, 110), et **en ce que** les moyens de nettoyage (30, 130) sont constitués par une partie saillante (32) du joint d'étanchéité distale (61) du volet (10, 110), partie saillante (32) qui est apte à coopérer par contact glissant avec ladite surface externe de l'écran de protection (3, 103).

21. Dispositif de vision arrière (1) selon l'une quelconque des revendications 1 à 20, **caractérisé en ce que** le volet (10) est monté mobile en déplacement par rapport à un support (4) sur lequel est monté fixement la caméra vidéo (2).

22. Dispositif de vision arrière (100) selon l'une quelconque des revendications 1 à 20, **caractérisé en ce que** le volet (110) est monté mobile en déplacement par rapport à un couvercle de protection (170) des moyens moteurs (120).

23. Dispositif de vision arrière (1, 100) selon l'une quelconque des revendications 1 à 22, **caractérisé en ce que** le volet (10, 110) est réalisé en matériau transparent.

24. Dispositif de vision arrière (1, 100) selon la revendication 23, **caractérisé en ce que** le volet (10, 110) comporte des moyens prismatiques aptes à modifier le champ de vision de la caméra vidéo (2) en fonction de la position relative dudit volet (10, 110) par rapport à l'objectif de ladite caméra vidéo (2).

25. Véhicule automobile, **caractérisé en ce qu'**il comporte au moins un dispositif de vision arrière (1, 100) selon l'une quelconque des revendications précédentes.

## Claims

1. Rear view device (1, 100) for a motor vehicle, comprising:
- a video camera (2) designed for being integrated in a fixed manner in the rear of a motor vehicle,
- a shutter (10, 110) mounted mobile between a closed position and an open position in which said shutter (10, 110) is arranged respectively in front of and separated from the lens of the video camera (2), and
- motor means (20, 120) that are capable of driving the movement of the shutter (10, 110) between the closed position and the open position,
the shutter comprising pivoting means (13a, 13b) defining a pivoting axis and allowing the change from one position to the other,
**characterised in that** the shutter also comprises
- a curved part (11); and
- articulation arms (12a, 12b),
the articulation arms being solidly attached to the curved part (11) and pivoting means (13a, 13b).

2. Rear view device (1, 100) according to claim 1, **characterised in that** the pivoting axis is coaxial in relation to the axis that corresponds to the curve of the concave face (15) of the curved part (11).

3. Rear view device (1, 100) according to claim 1 or 2, **characterised in that** the shutter (10, 110) also comprises means (17) for transmitting a movement generated by the motor means (20), the transmission means being solidly attached to the shutter (10, 110).

4. Rear view device (1, 100) according to the preceding claim, **characterised in that** the transmission means (17) are arranged on one of the articulation arms (12a, 12b).

5. Rear view device (1, 100) according to claim 3 or 4, **characterised in that** the transmission means (17) form a single part with the shutter (10, 110).

6. Rear view device (1, 100) according to any one of the preceding claims, **characterised in that** it comprises elastic return means (22, 25a, 25b) that are capable of driving the movement of the shutter (10, 110) from its open position to its closed position.

7. Rear view device (1, 100) according to the preceding claim, **characterised in that** the shutter (10, 110) comprises a stop (26b) solidly attached to the shutter (10), cooperating by blocking contact with the elastic return means (25b).

8. Rear view device (1, 100) according to the preceding claim, **characterised in that** the stop (26b) forms a single part with the shutter (10, 110).

9. Rear view device (1, 100) according to any one of the preceding claims, **characterised in that** the motor means (20, 120) are capable of immobilising the shutter (10, 110) in at least one intermediate position located between the closed position and the open position.

10. Rear view device (1, 100) according to any one of the claims from 1 to 9, **characterised in that** the motor means (20, 120) comprise:
- an electric motor (21) that is capable of driving the movement of the shutter (10, 110) from the closed position to the open position,
- elastic return means (22) that are capable of driving the movement of the shutter (10, 110) from the open position to the closed position,
- and stopping means (23, 24) that are capable of stopping the movement of the shutter (10, 110) in the open position and in the closed position.

11. Rear view device (1, 100) according to any one of the claims from 1 to 9, **characterised in that** the motor means (20, 120) comprise an electric stepping motor that is capable, on the one hand, of driving the movement of the shutter (10, 110) between the closed position and the open position and, on the other hand, of stopping the movement of said shutter (10, 110) in the open position and in the closed position.

12. Rear view device (1, 100) according to any one of the claims from 1 to 10, **characterised in that** the shutter (10, 110) is capable of being driven manually to move between the closed position and a storage position located beyond the open position, and **in that** said rear view device (1, 100) comprises blocking means (40) that are capable of immobilising the shutter (10, 110) in the storage position.

13. Rear view device (1, 100) according to any one of the claims from 1 to 11, **characterised in that** it comprises locking means (50) that are capable of blocking the shutter (10, 100) in the closed position when the motor means (20, 120) are not implemented.

14. Rear view device (1, 100) according to any one of the claims from 1 to 13, **characterised in that** the shutter (10, 110) is mounted mobile through a slot (6, 106) made in a support (4, 104), and **in that** said rear view device (1, 100) comprises sealing means (60) that are capable of sealing the space between the shutter (10, 100) and the support (4, 104).

15. Rear view device (1, 100) according to claim 14, **characterised in that** the sealing means (60) comprise a first seal (61) on the distal end (18) of the shutter (10, 110), which is capable of sealing the space between the shutter (10, 110) and the support (4, 104) when said shutter (10, 110) is in its open position, as well as a second seal (62) on the proximal end (16) of the shutter (10, 110) that is capable of sealing the space between the shutter (10, 110) and the support (4, 104) when said shutter (10, 110) is in its closed position.

16. Rear view device (1, 100) according to one of the claims 14 or 15, **characterised in that** the sealing means (60) include a third seal that is solidly attached to the support (4, 104), which is positioned at the level of the slot (6, 106) and capable of cooperating by sliding contact with the shutter (10, 110).

17. Rear view device (1, 100) according to any one of the claims from 1 to 16, **characterised in that** it comprises cleaning means (30, 130) that are capable of wiping the outside cover of the lens of the video camera (2) when moving the shutter (10, 110) between the closed position and the open position.

18. Rear view device (1, 100) according to any one of the claims from 1 to 16, **characterised in that** it comprises, on the one hand, a transparent screen (3, 103) that is capable of protecting the lens of the video camera (2) and, on the other hand, cleaning means (30, 130) that are capable of wiping said protective screen (3, 103) when the shutter (10, 110) moves between the closed position and the open position.

19. Rear view device (1, 100) according to claim 18, **characterised in that** the outer surface of the protective screen (3, 103) is substantially parallel to the path of movement of the shutter (10, 110), and **in that** the cleaning means (30, 130) comprise a scraping seal (31) that is solidly attached to the distal end (18) of the shutter (10, 110) and which is capable of cooperating by sliding contact with said outer surface of the protective screen (3, 103).

20. Rear view device (1, 100) according to one of the claims 18 or 19, **characterised in that** the outer surface of the protective screen (3, 103) is substantially parallel to the path of movement of the shutter (10, 110), and **in that** the cleaning means (30, 130) consist of a projecting part (32) of the distal watertightness seal (61) of the shutter (10, 110), the projecting part (32) being capable of cooperating by sliding contact with said outer surface of the protective screen (3, 103).

21. Rear view device (1, 100) according to any one of the claims from 1 to 20, **characterised in that** the shutter (10) is mounted mobile in relation to a support (4) on which the video camera (2) is mounted in a fixed manner.

22. Rear view device (1, 100) according to any one of the claims from 1 to 20, **characterised in that** the shutter is mounted mobile in relation to a protective cover (170) of the motor means (120).

23. Rear view device (1, 100) according to any one of the claims from 1 to 22, **characterised in that** the shutter (10, 110) is made from a transparent material.

24. Rear view device (1, 100) according to claim 23, **characterised in that** the shutter (10, 110) comprises prismatic means that are capable of modifying the field of vi ew of the video camera (2) according to the relative position of said shutter (10, 110) in relation to the lens of said video camera (2).

25. Motor vehicle, **characterised in that** it comprises at least one rear view device (1, 100) according to any one of the preceding claims.

## Patentansprüche

1. Vorrichtung zum Rückwärtssehen (1, 100) für ein Kraftfahrzeug, mit
- einer zur festen Integration im Heck eines Kraftfahrzeugs bestimmten Videokamera (2),
- einer mobil zwischen einer Verschlussposition und einer Öffnungsposition angebr achten Klappe (10, 110), in welchen die genannte Klappe (10, 11 0) jeweils vor und beabstandet von dem Objektiv der Videokamera (2) angebracht ist und
- zum Antreiben der Klappe (10, 110) in der Verschiebung zwischen der Verschlussposition und der Öffnungsposition geeigneten Antriebsmitteln (20, 120),
wobei die Klappe eine Schwenkachse definierende und den Durchgang von einer Position zur anderen erlaubende Schwenkmittel (13a, 13b) umfasst,
**dadurch gekennzeichnet, dass** die Klappe darüber hinaus Folgendes umfasst:
- einen gekrümmten Teil (11); und
- Gelenkarme (12a, 12b),
wobei die Gelenkarme fest mit dem gekrümmten Teil (11) und den Schwenkmitteln (13a, 13b) verbunden sind.

2. Vorrichtung zum Rückwärtssehen (1, 100) gemäß Anspruch 1, **dadurch gekennzeichnet, dass** die Schwenkachse koaxial im Verhältnis zur der Krümmung der konkaven Seite (15) des gekrümmten Teils (11) entsprechenden Krümmung ist.

3. Vorrichtung zum Rückwärtssehen (1, 100) gemäß Anspruch 1 oder 2, **dadurch gekennzeichnet, dass** die Klappe (10, 110) darüber hinaus ein Übertragungsmittel (17) einer von den Antriebsmitteln (20) erzeugten Bewegung umfasst, wobei das Übertragungsmittel fest mit der Klappe (10, 110) verbunden ist.

4. Vorrichtung zum Rückwärtssehen (1, 100) gemäß dem vorherigen Anspruch, **dadurch gekennzeichnet, dass** das Übertragungsmittel (17) auf einem der Gelenkarme (12a, 12b) angeordnet ist.

5. Vorrichtung zum Rückwärtssehen (1, 100) gemäß Anspruch 3 oder 4, **dadurch gekennzeichnet, dass** das Übertragungsmittel (17) aus einem Stück mit der Klappe (10, 100) besteht.

6. Vorrichtung zum Rückwärtssehen (1, 100) gemäß einem der vorherigen Ansprüche, **dadurch gekennzeichnet, dass** sie zum Antreiben der Klappe (10, 110) in der Verschiebung von der Öffnungsposition in die Verschlussposition geeignete elastische Rückholmittel (22, 25a, 25b) umfasst.

7. Vorrichtung zum Rückwärtssehen (1, 100) gemäß dem vorherigen Anspruch, **dadurch gekennzeichnet, dass** die Klappe (10, 110) einen mit der Klappe (10) fest verbundenen, per blockierendem Kontakt mit den elastischen Rückholmitteln (25b) zusammenwirkenden Anschlag (26b) umfasst.

8. Vorrichtung zum Rückwärtssehen (1, 100) gemäß dem vorherigen Anspruch, **dadurch gekennzeichnet, dass** der Anschlag (26b) mit der Klappe (10, 110) aus einem Stück besteht.

9. Vorrichtung zum Rückwärtssehen (1, 100) gemäß einem der vorherigen Ansprüche, **dadurch gekennzeichnet, dass** die Antriebsmittel (20, 120) zur Immobilisierung der Klappe (10, 110) in wenigstens einer sich zwischen der Verschlussposition und der Öffnungsposition befindenden Zwischenposition geeignet sind.

10. Vorrichtung zum Rückwärtssehen (1, 100) gemäß Anspruch 1 bis 9, **dadurch gekennzeichnet, dass** die Antriebsmittel (20, 120) Folgendes umfassen:
- einen Elektromotor (21), der zum Antreiben der Klappe (10, 110) in der Verschiebung von der Verschlussposition zur Öffnungsposition geeignet ist,
- zum Antreiben der Klappe (10, 110) in der Verschiebung von der Öffnungsposition in die Verschlussposition geeignete elastische Rückholmittel (22),
- und zum Stoppen der Verschiebung der Klappe (10, 110) in der Öffnungsposition und in der Verschlussposition geeignete Anschlagsmittel (23, 24).

11. Vorrichtung zum Rückwärtssehen (1, 110) gemäß Anspruch 1 bis 9, **dadurch gekennzeichnet, dass** die Antriebsmittel (20, 120) einen Elektromotor vom Typ schrittweise umfassen, der einerseits zum Antreiben der Klappe (10, 110) in der Verschiebung zwischen der Verschlussposition und der Öffnungsposition und andererseits zum Stoppen der Verschiebung der genannten Klappe (10, 110) in der Öffnungsposition und in der Verschlussposition geeignet ist.

12. Vorrichtung zum Rückwärtssehen (1, 100) gemäß Anspruch 1 bis 10, **dadurch gekennzeichnet, dass** die Klappe (10, 110) zum manuellen Antreiben in der Verschiebung zwischen der Verschlussposition und einer sich über die Öffnungsposition hinaus befindenden Lagerposition geeignet ist und dass die genannte Vorrichtung zum Rückwärtssehen (1, 100) zum Immobilisieren der Klappe (10, 110) in der Lagerposition geeignete Blockiermittel (40) umfasst.

13. Vorrichtung zum Rückwärtssehen (1, 100) gemäß Anspruch 1 bis 11, **dadurch gekennzeichnet, dass** sie Verriegelungsmittel (50) umfasst, die bei nicht erfolgter Umsetzung der Antriebsmittel (20, 120) zum Blockieren der Klappe (10, 110) in der Verschlussposition geeignet sind.

14. Vorrichtung zum Rückwärtssehen (1, 100) gemäß Anspruch 1 bis 13, **dadurch gekennzeichnet, dass** die Klappe (10, 110) mobil über einen in einem Träger (4, 104) ausgesparten Schlitz (6, 106) angebracht ist und dass die genannte Vorrichtung zum Rückwärtss ehen (1, 100) zur Abdichtung des Raums zwischen der Klappe (10, 110 und dem Träger (4, 104) geeignete Abdichtungsmittel (60) umfasst.

15. Vorrichtung zum Rückwärtssehen (1, 100) gemäß Anspruch 4, **dadurch gekennzeichnet, dass** die Abdichtungsmittel (60) eine erste Dichtung (61) a m distalen Ende (18) der Klappe umfassen , die geeignet ist, den Raum zwischen der Klappe (10, 110) und dem Träger (4, 104) abzudichten, wenn die genannte Klappe (10, 110) sich in Öffnungsposition befindet, sowie eine zweite Dichtung (62) am proximalen Ende (16) der Klappe (10, 110), die zum Abdichten des Raums zwischen der Klappe (10, 110) und dem Träger (4, 104) geeignet ist, wenn die genannte Klappe (10, 110) sich in der Verschlussposition befindet.

16. Vorrichtung zum Rückwärtssehen (1, 100) gemäß Anspruch 14 oder 15, **dadurch gekennzeichnet, dass** die Abdichtungsmittel (60) eine dritte Dichtung umfassen, die fest mit dem Träger (4, 104) verbunden ist, der auf der Höhe des Schlitzes (6, 106) positioniert ist und der zum Zusammenwirken mit der Klappe (10, 110) per gleitendem Kontakt geeignet ist.

17. Vorrichtung zum Rückwärtssehen (1, 100) gemäß Anspruch 1 bis 16, **dadurch gekennzeichnet, dass** er zum Abwischen der externen Linse des Objektivs der Videokamera (2) bei der Verschiebung der Klappe (10, 110) zwischen der Verschlussposition und der Öffnungsposition geeignete Reinigungsmittel (30, 130) umfasst.

18. Vorrichtung zum Rückwärtssehen (1, 100) gemäß Anspruch 1 bis 16, **dadurch gekennzeichnet, dass** sie einerseits einen zum Schutz des Objektivs der Videokamera (2) geeigneten transparenten Schirm (3, 103) umfasst und andererseits zum Abwischen des genannten Schutzschirms (3, 103) bei der Verschiebung der Klappe (10, 110) zwischen der Verschlussposition und der Öffnungsposition geeignete Reinigungsmittel (30, 130).

19. Vorrichtung zum Rückwärtssehen (1, 100) gemäß Anspruch 18, **dadurch gekennzeichnet, dass** die äußere Fläche des Schutzschirms (3, 103) deutlich parallel zur Verschiebungsbahn der Klappe (10, 110) ist und dass die Reinigungsmittel (30, 130) eine Schaberdichtung (31) umfassen, die fest mit dem distalen Ende (18) der Klappe (10, 110) verbunden ist und die zum Zusammenwirken mit der genannten äußeren Fläche des Schutzschirms (3, 103) per gleitendem Kontakt geeignet ist.

20. Vorrichtung zum Rückwärtssehen (1, 100) gemäß Anspruch 18 oder 1 9, **dadurch gekennzeichnet, dass** die äußere Fläche des Schutzschirms (3, 103) deutlich parallel zur Verschiebungsbahn der Klappe (10, 110) ist und dass die Reinigungsmittel (30, 130) durch einen hervorstehenden Teil (32) der distalen Abdichtungsdichtung (61) der Klappe (10,1 10) gebildet werden, wobei der hervorstehende Teil (32) zum Zusammenwirken mit der genannten äußeren Fläche des Schutzschirms (3, 103) per gleitendem Kontakt geeignet ist.

21. Vorrichtung zum Rückwärtssehen (1) gemäß Anspruch 1 bis 20, **dadurch gekennzeichnet, dass** die Klappe (10) in Verschiebung gegenüber einem Träger (4), auf dem die Videokamera (2) fest befestigt ist, mobil angebracht ist.

22. Vorrichtung zum Rückwärtssehen (100) gemäß Anspruch 1 bis 20, **dadurch gekennzeichnet, dass** die Klappe (110) in Verschiebung im Verhältnis zu einem Schutzdeckel (170) der Antriebsmittel (120) mobil angebracht ist.

23. Vorrichtung zum Rückwärtssehen (1, 100) gemäß Anspruch 1 bis 22, **dadurch gekennzeichnet, dass** die Klappe (10, 110) aus transparentem Material realisiert wird.

24. Vorrichtung zum Rückwärtssehen (1, 100) gemäß Anspruch 23, **dadurch gekennzeichnet, dass** die Klappe (10, 110) zur Änderung des Sichtfeldes der Videokamera (2) in Abhängigkeit von der relativen Position der genannten Klappe (10, 110) im Verhältnis zum Objektiv der genannten Videokamera (2) geeignete prismatische Mittel umfasst.

25. Kraftfahrzeug, **dadurch gekennzeichnet, dass** es wenigstens eine Vorrichtung zum Rückwärtssehen (1, 100) gemäß einem der vorherigen Ansprüche umfasst.
